# EUROPEAN PATENT SPECIFICATION

(11) **EP 3 306 837 B1**
(45) Date of publication and mention of the grant of the patent: **22.12.2021**
(21) Application number: 16802967.6
(22) Date of filing: 28.04.2016
(51) Int. Cl.: H04B 13/00

(54) **COMMUNICATION APPARATUS, COMMUNICATION SYSTEM, COMMUNICATION METHOD, AND PROGRAM**
KOMMUNIKATIONSVORRICHTUNG, KOMMUNIKATIONSSYSTEM, KOMMUNIKATIONSVERFAHREN UND PROGRAMM
APPAREIL DE COMMUNICATION, SYSTÈME DE COMMUNICATION, PROCÉDÉ DE COMMUNICATION, ET PROGRAMME

(30) Priority: 02.06.2015 JP 2015111818
(43) Date of publication of application: 11.04.2018
(73) Proprietor: Sony Group Corporation, Tokyo 108-0075 (JP)
(72) Inventor: AMANO, Sho, Tokyo 108-0075 (JP)
(74) Representative: Witte, Weller & Partner Patentanwälte mbB
(86) International application number: PCT/JP2016/063361
(87) International publication number: WO 2016/194530

(56) References cited:
- EP-A1- 2 481 175
- EP-A2- 2 426 865
- JP-A- H11 259 247
- JP-A- 2012 525 759

## Description

### TECHNICAL FIELD

The present technology relates to a communication apparatus. Specifically, the present invention relates to a communication apparatus, a communication system, and a communication method to perform communication using a body as a transmission medium of a signal and a program for causing a computer to execute the method.

### BACKGROUND ART

EP 2 426 865 A2 relates to the field of Body Area Networks for medical implant communications and discloses an apparatus and a method for managing an emergency event in a terminal apparatus, comprising determining whether an emergency event occurs; selecting a channel for transmitting an alarm message indicating occurrence of an emergency event, if the emergency event occurs; transmitting the alarm message to a coordinator using the selected channel; determining whether a response message to the alarm message is received, for a predetermined time; and performing an operation associated with the emergency event if the response message is received.

Conventionally, there is a communication technology of exchanging information using communication using a human body as a transmission medium of a signal. For example, Non-Patent Document 1 is established as a standard specification.

In addition, for example, a communication system has been proposed in which intra-body communication is used to drive only a specific responder from an interrogator to receive a response signal (for example, see Patent Document 1). In this communication system, an oscillation frequency unique to a power reception circuit of the responder is allocated. An interrogation signal having the unique oscillation frequency is transmitted from the interrogator, thereby feeding power to the responder and transmitting a response signal.

In addition, for example, a sensor network system has been proposed that reduces power consumption of a node by exchanging signals between a router and a node conforming to intra-body communication (for example, see Patent Document 2). In this system, the router periodically transmits a periodic signal including an ID to the node. Moreover, when the node does not detect a periodic signal including its own ID, the node shifts to a standby state where transmission of a signal to the router is stopped. In addition, when a certain period of time has elapsed while the node is in the standby state, the node shifts to a dormant state in which transmission and reception of a signal is stopped. Furthermore, when the node detects a potential difference between electrodes for intra-body communication or a change in a current value is detected while the node is in the dormant state, or when data from a sensor coupled to the node satisfies a specific condition, the node recovers from the dormant state to a power-on state.

### CITATION LIST

### PATENT DOCUMENTS

Patent Document 1: Publication of Unexamined Patent Application No. 2012-23565
Patent Document 2: Publication of Unexamined Patent Application No. 2010-141469

### NON-PATENT DOCUMENT

Non-Patent Document 1: ECMA-401 (1st Edition/December, 2011)

### SUMMARY OF THE INVENTION

### PROBLEMS TO BE SOLVED BY THE INVENTION

In the aforementioned conventional technique, information can be exchanged using intra-body communication.

In addition, in Non-Patent Document 1, a communication apparatus (Talker) that attempts to initiate communication voluntarily and a communication apparatus (Listener) that initiates communication in response to the Talker are further specified. In addition, each of the communication apparatuses can find the other communication apparatus by performing listening operation and can be automatically coupled to the other found communication apparatus.

Here, the aforementioned conventional communication apparatuses generally have a feature that power consumption of reception processing is larger than that of transmission processing. For this reason, for example, in a case of an apparatus with a relatively small battery capacity, it is preferable that a time length for performing transmission processing is longer than a time length for performing reception processing in the listening operation.

The present technology has been created in view of such a situation and aims to reduce power consumption during the listening operation.

### SOLUTIONS TO PROBLEMS

In accordance with the invention, there is provided a communication apparatus as claimed in claim 1 that is operable as a Talker, and a communication apparatus as claimed in claim 7 that is operable as a Listener. There is also provided a communication system as claimed in the independent system claim.

In accordance with the invention, there is provided a communication method as claimed in claim 11 that is operable as a Talker control procedure, and a communication method as claimed in claim 12 that is operable as a Listener control procedure. There are also provided corresponding computer programs.

The present technology has been devised in order to solve the aforementioned disadvantages. A first aspect of the present technology includes a communication apparatus, a communication method thereof, and a program for causing a computer to execute the method, the communication apparatus including: a control unit which, out of an active period in which an association request is made to another communication apparatus, controls to perform transmission and reception processing of a frame in a specific period and to control to perform transmission processing of a frame in another period in communication in which a body is used as a transmission medium of a signal, and power consumption of reception processing is higher than that of transmission processing. This achieves an effect that, out of the active period in which the association request is made to the other communication apparatus, transmission and reception processing of a frame is performed in the specific period, and transmission processing of a frame is performed in the other period.

Moreover, in the first aspect, the control unit may control to perform Listen Before Talk (LBT) first in the active period and set a period after the LBT as the specific period and the other period. This achieves an effect that, the LBT is performed first in the active period, and the period after the LBT is set as the specific period and the other period.

Moreover, in the first aspect, the control unit may control to set, as the specific period, any one of a period immediately after the LBT, a last period in the active period, and an intermediate period in the active period. This achieves an effect of setting, as the specific period, any one of the period immediately after the LBT, the last period in the active period, and the intermediate period in the active period.

Moreover, in the first aspect, the control unit may control to add information on a timing of performing the transmission and reception processing to a frame transmitted in the transmission and reception processing or the transmission processing. This achieves an effect of adding information on the timing of performing the transmission and reception processing to the frame transmitted in the transmission and reception processing or the transmission processing.

Furthermore, in the first aspect, the control unit may control to perform transmission processing of an association request frame for performing the association request in the other period and perform transmission processing of the association request frame and reception processing of a response frame to the association request frame in the specific period. This achieves an effect that transmission processing of the association request frame is performed in the other period, and transmission processing of the association request frame and reception processing of the response frame are performed in the specific period.

Moreover, in the first aspect, the communication may be data exchange conforming to the ECMA-401 specification, the communication apparatus may be activated as a Talker performing the association request, and, in a case where the association request is accepted from another communication apparatus while the LBT is performed in the active period, the control unit controls to change a role of the communication apparatus from the Talker to a Listener. This achieves an effect that, in a case where the association request is accepted from the other communication apparatus while the LBT is performed in the active period, the role of the communication apparatus is changed from the Talker to the Listener.

Moreover, a second aspect of the present technology includes a communication apparatus, a communication method thereof, and a program for causing a computer to execute the method, the communication apparatus including: a control unit which controls to switch between an active period in which an association request is accepted and a sleep period in which the association request is not accepted at a predetermined timing in communication in which a body is used as a transmission medium of a signal and, in a case where a specific frame is received from another communication apparatus in the active period, suppresses transition to the sleep period to maintain the active period. This achieves an effect that, in a case where a specific frame is received from another communication apparatus in the active period, transition to the sleep period is suppressed and the active period continues.

Furthermore, in the second aspect, the control unit may control to maintain the active period while receiving the specific frame, and in a case where the specific frame is no longer received after receiving the specific frame, to maintain the active period for a predetermined period of time after reception of the specific frame has stopped. This achieves an effect that the active period is maintained while the specific frame is received, and in a case where the specific frame is no longer received after receiving the specific frame, the active period is maintained for a predetermined period of time after reception of the specific frame has stopped.

Moreover, in the second aspect, in a case where timing information on a timing at which the other communication apparatus performs reception processing of a response frame to the specific frame is included in the specific frame, the control unit may control to transmit the response frame to the other communication apparatus on the basis of the timing. This achieves an effect that, in a case where timing information on a timing at which the other communication apparatus performs reception processing of a response frame to the specific frame is included in the specific frame, the response frame is transmitted to the other communication apparatus on the basis of the timing.

Moreover, in the second aspect, the control unit may control to transition to and maintain the sleep period until the timing at which the other communication apparatus performs the reception processing of the response frame. This achieves an effect of transitioning to and maintaining the sleep period until the timing at which the other communication apparatus performs the reception processing of the response frame.

Moreover, a third aspect of the present technology includes a communication system, a communication method thereof, and a program for causing a computer to execute the method, the communication system including: a first communication apparatus which, out of a period in which an association request is made to a second communication apparatus, performs transmission and reception processing of a frame in a specific period and performs transmission processing of a frame in another period in communication in which a body is used as a transmission medium of a signal, and power consumption of reception processing is higher than that of transmission processing; and the second communication apparatus which switches between an active period in which the association request is accepted and a sleep period in which the association request is not accepted at a predetermined timing in the communication and, in a case where a specific frame is received from the first communication apparatus in the active period, suppresses transition to the sleep period to maintain the active period. This achieves an effect that the first communication apparatus, out of the period in which the association request is made to the second communication apparatus, performs transmission and reception processing of a frame in the specific period and performs transmission processing of a frame in the other period and that, in a case where the specific frame is received from the first communication apparatus in the active period, the second communication apparatus suppresses transition to the sleep period to maintain the active period.

### EFFECTS OF THE INVENTION

According to the present technology, it is possible to achieve an excellent effect of reducing power consumption during listening operation. Note that effects described herein are not necessarily limited. Any one of the effects described in the present disclosure may be included.

### BRIEF DESCRIPTION OF DRAWINGS

Fig. 1 is a block diagram illustrating a configuration example of a communication apparatus 100 according to an embodiment of the present technology.
Fig. 2 is a diagram illustrating an example of intermittent operation by apparatuses of ECMA-401 specification as a basis of the present technology.
Fig. 3 is a diagram illustrating an example of communication in a case where data is exchanged between the communication apparatus 100 and a communication apparatus 200 according to the embodiment of the present technology.
Fig. 4 is a diagram illustrating an example of communication in a case where data is exchanged between the communication apparatus 100 and the communication apparatus 200 according to the embodiment of the present technology.
Fig. 5 is a diagram illustrating an example of communication in a case where data is exchanged between the communication apparatus 100 and the communication apparatus 200 according to the embodiment of the present technology.
Fig. 6 is a diagram illustrating an example of communication in a case where data is exchanged between the communication apparatus 100 and the communication apparatus 200 according to the embodiment of the present technology.
Fig. 7 is a flowchart illustrating an example of a processing procedure of data communication processing by the communication apparatus 100 according to the embodiment of the present technology.
Fig. 8 is a flowchart illustrating an example of a processing procedure of data communication processing by a communication apparatus 200 according to the embodiment of the present technology.
Fig. 9 is a diagram illustrating an example of communication in a case where data is exchanged between the communication apparatus 100 and the communication apparatus 200 according to the embodiment of the present technology.
Fig. 10 is a flowchart illustrating an example of a processing procedure of data communication processing by the communication apparatus 200 according to the embodiment of the present technology.
Fig. 11 is a diagram illustrating an example of communication in a case where data is exchanged among communication apparatuses 500, 510, 520, and 530 of an embodiment of the present technology.

### MODES FOR CARRYING OUT THE INVENTION

Embodiments for carrying out the present technology (hereinafter referred to as "embodiments") will be described below. Descriptions will be given in the following order.

### 1. Embodiment (example where one communication apparatus performs transmission and reception processing of a frame in a specific period in the active state and performs transmission processing of a frame in another period, and in a case where another communication apparatus receives the REQ 1 in the active state, suppresses transition to the sleep state to maintain the active state)

<1. Embodiment>

### [Configuration Example of Communication Apparatus]

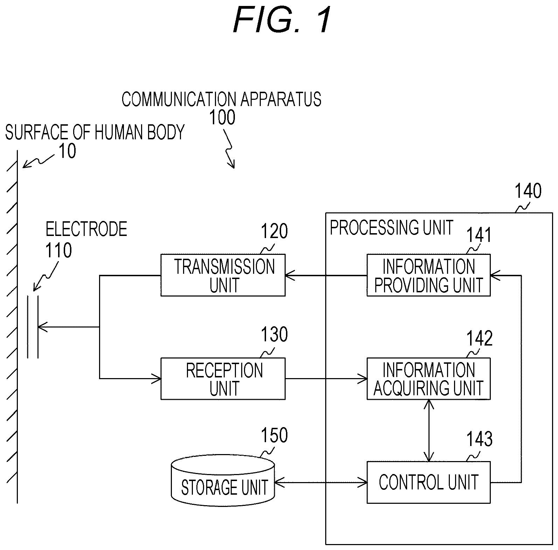

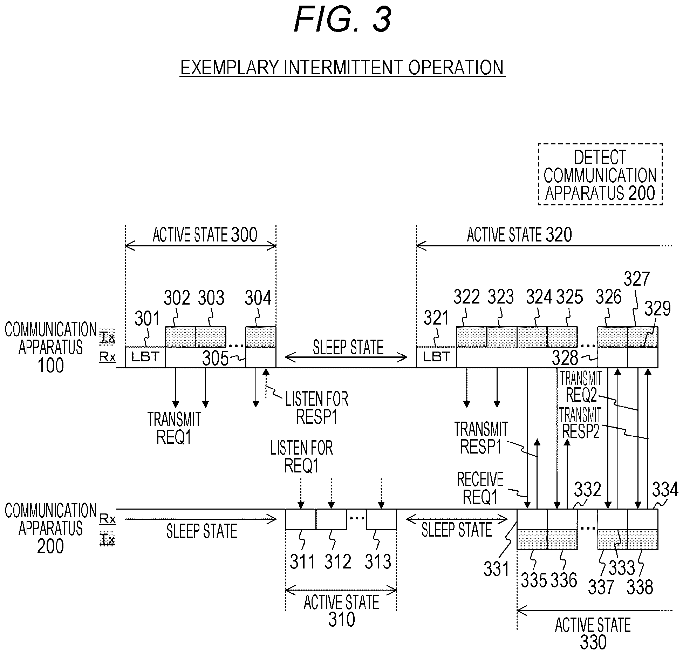

Fig. 1 is a block diagram illustrating a configuration example of a communication apparatus 100 according to an embodiment of the present technology. Note that descriptions on a configuration of the communication apparatus 200 is omitted since the configuration of the communication apparatus 200 illustrated in Figs. 3 to 6 and 9 is similar to that of the communication apparatus 100.

The communication apparatus 100 is an example of a communication apparatus (for example, an intra-body communication apparatus) that performs communication using a body (for example, a human body or an animal body) as a transmission medium of a signal. This communication (communication using a body as a transmission medium of a signal) is possible in a case where an apparatus is attached to a surface of a body (or in proximity thereof (for example, a surface of clothes)). Moreover, the communication apparatus 100 is implemented by, for example, an apparatus conforming to ECMA-401.

Moreover, in the embodiment of the present technology, an example is illustrated in which the communication apparatus 100 performs communication using a human body as a transmission medium of a signal. Furthermore, in the embodiment of the present technology, an example is illustrated in which the communication apparatus 100 is attached to a surface of a human body (for example, skin surface) for use.

The communication apparatus 100 may be, for example, an apparatus wearable on a human body (or on an item worn on a human body (clothing, a hat, etc.) For example, the communication apparatus 100 may be a smartphone, a tablet terminal, a headphone, an earphone, a wristwatch, a wristband, a speaker, eyeglasses, or a sphygmomanometer.

The communication apparatus 100 includes an electrode 110, a transmission unit 120, a reception unit 130, a processing unit 140, and a storage unit 150.

In a case where the communication apparatus 100 is attached to a human body, the electrode 110 is brought into a state of being in contact with (or in proximity to) a surface 10 of a human body.

The transmission unit 120 includes a transmission circuit and generates a potential variation through the electrode 110 in a case where the electrode 110 is in contact with the surface 10 of the human body. That is, the transmission unit 120 generates potential fluctuation through the electrode 110 to transmit data provided from an information providing unit 141 to another communication apparatus attached to the human body. Note that the transmission circuit is turned on and off under control of the processing unit 140 (control unit 143).

The reception unit 130 includes a reception circuit and detects potential fluctuation generated by the other communication apparatus through the electrode 110 in a case where the electrode 110 is in contact with the surface 10 of the human body. That is, the reception unit 130 receives data transmitted from the other communication apparatus by detecting the potential fluctuation generated by the other communication apparatus via the electrode 110. Then, the reception unit 130 supplies the received data to an information acquiring unit 142. Note that the reception circuit is turned on and off under control of the processing unit 140 (control unit 143).

In addition, the transmission unit 120 and the reception unit 130 operate in a time division manner for each time division slot (TDS).

The processing unit 140 is coupled to the transmission unit 120, the reception unit 130, and the storage unit 150. In addition, the processing unit 140 includes respective units (the information providing unit 141, the information acquiring unit 142, and the control unit 143) for processing transmission and reception signals.

The information providing unit 141 provides data to be transmitted to the other communication apparatus to the transmission unit 120 under control of the control unit 143.

Under control of the control unit 143, the information acquiring unit 142 acquires various information included in the data received by the reception unit 130 from the other communication apparatus, and supplies the information to the control unit 143.

The control unit 143 controls the operation content of the communication apparatus 100 on the basis of a control program. For example, the control unit 143 generates the timing at which the communication apparatus 100 operates for each TDS and determines the operation content. Furthermore, for example, the control unit 143 controls transmission and reception of data. Furthermore, for example, the control unit 143 fetches data from the storage unit 150 or stores data in the storage unit 150. Furthermore, for example, the control unit 143 performs control to turn on and off the transmission circuit in the transmission unit 120 and the reception circuit in the reception unit 130.

Note that as described above, Patent Document 1 is formulated as the standard specification for communication using a human body as a transmission medium of a signal.

### [About Listening Operation]

Here, the listening operation in the embodiment of the present technology will be described. In the embodiment of the present technology, the listening operation refers to an operation, by each of two communication apparatuses, to automatically search for a coupling party without intervention of an instruction by a user. For example, in a case where another party is found during the listening operation, coupling is automatically established and predetermined processing is performed.

For example, a case where a user wears a wristwatch equipped with an intra-body communication function. In this case, the wristwatch performs the listening operation and searches whether another apparatus (an apparatus having an intra-body communication function) exists on the human body.

Here, a case is assumed in which the user holds a smartphone (during listening operation) having the intra-body communication function. Alternatively, a case is assumed in which the user puts the smartphone (during the listening operation) in a pocket. In this case, the smartphone and the wristwatch find each other and automatically initiate communication without user's operation. For example, after authenticating the other party, data such as mails, a scheduler, and an address book can be automatically synchronized.

In this manner, each of the communication apparatuses automatically perform each processing during the listening operation. However, even during the listening operation, it is important for each of the communication apparatuses to suppress power consumption. Therefore, each of the communication apparatuses may perform intermittent operation.

For example, it is assumed that intermittent operation is performed in which two states of an active state and a sleep state (low power consumption state) are periodically repeated. Here, the active state refers to a state of performing operation of transmitting and receiving a radio wave to search for another apparatus. In the active state, in a case where another apparatus is found within a certain period of time, transition is made to operation of coupling to the found apparatus and performing data communication. Furthermore, the sleep state refers to a state in which transmission and reception of a radio wave is not performed.

For example, it is possible to suppress power consumption by shortening a time length of the active state and setting a time length of the sleep state to be long. That is, it is possible to perform the listening operation for a longer time using a battery of the same capacity. However, in a case where such setting is made, it may take longer to find another apparatus.

Moreover, in general, when two apparatuses perform the listening operation, in most of the cases one of the apparatuses periodically transmits a radio signal, and the other apparatus listens for a radio signal from the other and, when receiving the signal, returns a response of some type.

Here, a communication apparatus based on the ECMA-401 specification has a feature that power consumption of transmission operation is smaller than power consumption of reception operation. For this reason, for example, in a case where listening processing is performed between communication apparatuses having different battery capacities such as the wristwatch and the smartphone, it is important to set roles depending on a battery capacity. For example, a communication apparatus (peripheral apparatus) with a small battery capacity may play a role of transmitting a radio signal, and a communication apparatus (central apparatus) with a large battery capacity may play a role of receiving the radio signal.

Moreover, when the peripheral apparatus operates in an active state, power consumption can be suppressed if only transmission a radio frame can be performed while the reception circuit is turned off. However, when the reception circuit is turned off, even if the central apparatus returns a response of some type, the response cannot be received. Thus, another party cannot be found.

Therefore, in the embodiment of the present technology, although the peripheral apparatus continues to transmit a radio frame while in the active state, the reception circuit is turned on only for a several frames of a predetermined section. Also, the central apparatus returns a response when receiving a radio frame during the active state. Note that, as long as the other party continues to transmit a radio frame, the central apparatus does not enter a sleep state but continues to return a response.

This achieves an effect of suppressing power consumption by reducing time to operate the reception circuit while the peripheral apparatus ensures long time for the active state. That is, it is possible to implement intermittent operation taking advantage of the characteristics of ECMA-401.

As described above, according to the embodiment of the present technology, an example of reducing power consumption during the listening operation will be illustrated in which time taken for finding another party is not significantly increased when the listening operation is performed on the basis of the communication specifications defined in the ECMA-401 specification.

### [About Intermittent Operation]

Here, general intermittent operation in wireless communication will be described. Here, an explanation will be given with an example of general intermittent operation in a case where wireless communication is performed by an apparatus A and an apparatus B.

For example, while in an active state, the apparatus A transmits a radio signal (radio frame) and confirms whether a response from another party (apparatus B) is returned.

Moreover, while in the active state, the apparatus B listens for a radio signal (radio frame) from the other party (apparatus A) . Here, in a case where a radio signal arrives, the apparatus B transmits a signal of a response of some type to the other party. In this example, at the time when the apparatus A receives the response signal from the other party (apparatus B), the apparatus A can find the other party (apparatus B).

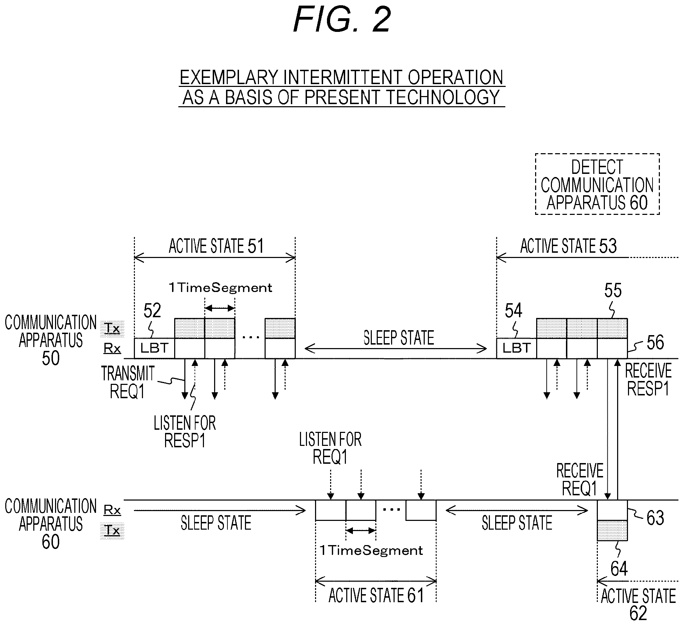

An example of applying this general intermittent operation in wireless communication to the apparatus of the ECMA-401 specification is illustrated in Fig. 2.

### [Exemplary Intermittent Operation Using ECMA-401 Apparatus]

Fig. 2 is a diagram illustrating an example of intermittent operation by an apparatus of the ECMA-401 specification as a basis of the present technology.

Here, according to the ECMA-401 specification, a communication apparatus (Talker) attempting to initiate communication voluntarily and a communication apparatus (Listener) to initiate communication in response to the Talker are specified. Further specified is a coupling procedure (Association) for notifying parameters necessary for data exchange in advance and obtaining agreement when a Talker initiates communication with a Listener. With this Association, another party can be found.

Furthermore, Fig. 2 illustrates an example of a case where a communication apparatus 50 is activated as a Talker and a communication apparatus 60 is activated as a Listener.

In this manner, in a case of finding another party, frames of Association Request-1 and Association Response-1 frames specified in the ECMA-401 specification can be used. Note that Association Request-1 will be hereinafter referred to as REQ 1. Moreover, in the drawings, Association Request-1 is abbreviated and described as REQ 1. Furthermore, Association Response-1 will be hereinafter referred to as RESP 1 for explanations. Moreover, in the drawings, Association Response-1 is abbreviated and described as RESP 1.

Note that in this example, an example of finding an apparatus using REQ 1 and RESP 1 is illustrated; however, an apparatus may be found using another frame.

First, since the communication apparatus 50 operates as a Talker during active states 51 and 53, Listen Before Talk (LBT) (52, 54) are performed. In this LBT, operation of searching a signal and checking a free time slot (TDS) is performed only for a certain period of time. After performing the LBT, the communication apparatus 50 continues transmitting the REQ 1 and listening for the RESP 1 during the active states 51 and 53.

Note that in Fig. 2, a period during which a transmission circuit of the communication apparatus 50 is in operation (period of transmission processing (Tx)) is schematically illustrated as a rectangle at an upper position on a time axis . Furthermore, a period during which the transmission circuit of the communication apparatus 50 is in operation (period of reception processing (Rx)) is schematically illustrated as a rectangle at a lower position on the time axis. Also, the period during which the transmission circuit of the communication apparatus 60 is in operation (the period of the transmission processing (Tx)) is schematically indicated by a rectangle at the lower position on the time axis. Furthermore, a period during which the reception circuit of the communication apparatus 60 is in operation (period of reception processing (Rx)) is schematically illustrated as a rectangle at an upper position on the time axis. Also in the drawings described hereinafter, transmission processing (Tx) and reception processing (Rx) are illustrated in a similar manner.

Moreover, in the ECMA-401, transmission and reception of a frame is managed in units of slots called time segment. It is further defined that a timing at which a certain apparatus returns a RESP 1 after receiving a REQ 1 is a half of one time segment.

Furthermore, the communication apparatus 60 continues to listen for a REQ 1 during active states 61 and 62.

Fig. 2 illustrates an example in which the communication apparatus 60 in the active state 62 detects a REQ 1 (55) transmitted by the communication apparatus 50 in the active state 53. In this manner, in a case where the REQ 1 is detected (63), the communication apparatus 60 transmits the response (RESP 1) to the REQ 1 to the communication apparatus 50 (64). Then, the communication apparatus 50 receives the RESP 1 (56)

Here, as described above, the apparatus of the ECMA-401 specification has higher power consumption for reception processing than for transmission processing. Therefore, in order to suppress the power consumption, it is important to reduce a period of reception processing (Rx). Therefore, Fig. 3 illustrates an example of improving the operation illustrated in Fig. 2 and reducing power consumption of the Talker.

### [Example of Turning Off reception circuit When Talker Transmits REQ 1]

Fig. 3 is a diagram illustrating an example of communication in a case where data is exchanged between the communication apparatus 100 and the communication apparatus 200 according to the embodiment of the present technology.

In Fig. 3, the communication apparatus 100 operating as a Talker operates only the transmission circuit without operating the reception circuit at the time of transmitting a REQ 1. This achieves an effect of reducing power consumed by the reception circuit in the communication apparatus 100. However, a response (RESP 1) from the listener cannot be detected unless the reception circuit is operated at the time of transmitting the REQ 1. For this reason, the reception circuit is operated only for a part of sections at the time of transmitting the REQ 1 to allow a RESP 1 to be received. Fig. 3 illustrates an example in which the reception circuit is operated only in the last section (the last one time segment) at the time of transmitting the REQ 1.

Also, in a case where receiving the REQ 1 from the Talker, the Listener returns a RESP 1. In this case, the Listener stays in the active state as long as the Listener continues to receive the REQ 1 from the Talker. That is, even at a timing when the Listener ends the active state and enters a sleep state, as long as the REQ 1 continues to be received from the Talker, the Listener stays in the active state without transitioning to the sleep state.

This enables reducing driving time of the reception circuit of the Talker to reduce power consumption without significantly increasing time required for detection of the Listener.

Specifically, in the active state 300, after performing the LBT (301), the communication apparatus 100 transmits the REQ 1 (302 to 304). In this case, the communication apparatus 100 turns off the reception circuit in sections other than a certain section. Furthermore, in the active state 300, the communication apparatus 100 turns on the reception circuit only for several time segments and listens for the RESP 1. Fig. 3 illustrates an example in which the reception circuit is turned on (305) only for the last one time segment to listen for the RESP 1.

Similarly, in the active state 320, the communication apparatus 100 performs the LBT (321) and then transmits the REQ 1 (322 to 326). Then, in the active state 320, the communication apparatus 100 turns on the reception circuit only for the last one time segment (328) to listen for the RESP 1.

In this case, in a case where receiving the RESP 1 from the communication apparatus 200 (328), the communication apparatus 100 transmits a REQ 2 to the communication apparatus 200 (327). Subsequently, the communication apparatus 100 listens for a RESP 2, and in a case where receiving the RESP 2 from the communication apparatus 200 (329), coupling with the communication apparatus 200 is completed.

Furthermore, in the active state 310, the communication apparatus 200 listens for the REQ 1 (311 to 313). However, it is assumed that the communication apparatus 200 has failed to detect the REQ 1 in the active state 310.

Similarly, the communication apparatus 200 listens for the REQ 1 (331 to 333) in the active state 330. In this case, it is assumed that the communication apparatus 200 detects the REQ 1 (331 to 333).

In this manner, in a case where detecting the REQ 1 from the communication apparatus 100 (331 to 333), the communication apparatus 200 transmits the RESP 1 to the communication apparatus 100 (335 to 337). However, the communication apparatus 100 cannot receive the RESP 1 from the communication apparatus 200 while the reception circuit is turned off (335, 336) in the communication apparatus 100. Therefore, as long as the communication apparatus 100 continues to transmit the REQ 1, the communication apparatus 200 suppresses transition to the sleep state.

As described above, in a case where receiving the RESP 1 from the communication apparatus 200 (328), the communication apparatus 100 transmits the REQ 2 to the communication apparatus 200 (327) . In this manner, in a case where detecting the REQ 2 from the communication apparatus 100 (334), the communication apparatus 200 transmits the RESP 2 to the communication apparatus 100 (338).

Note that in Fig. 3, for ease of explanation, the example in which the period during which the Talker turns on the reception circuit in the active state is set as the last one time segment is illustrated. However, in reality, a frame transmitted may not reach the other party correctly due to disturbance such as noise. Therefore, in the active state, a section in which the Talker turns on the reception circuit may be larger than one time segment. For example, in the active state, the period during which the Talker turns on the reception circuit can be last N time segments (where N is an integer of 2 or more).

Moreover, in Fig. 3, the example in which the period during which the Talker turns on the reception circuit in the active state is at the end is illustrated; however, the present invention is not limited thereto. For example, a point near the middle in the active state can be set as a period during which the Talker turns on the reception circuit. Also, for example, the first N time segments (where N is an integer of 1 or more) in the active state can be set as the period during which the Talker turns on the reception circuit.

Here, in the example illustrated in Fig. 3, for example, it is also assumed that, while the communication apparatus 100 is transmitting the REQ 1, the communication apparatus 200 initiates reception of the REQ 1 and then for some reason (for example deterioration of the communication environment) fails to receive the REQ 1. That is, it is also assumed that the REQ 1 transmitted by the communication apparatus 100 is lost on the way. In this case, it is possible to assume that the communication apparatus 200 determines that the REQ 1 from the communication apparatus 100 has been disrupted and transitions to the sleep state even though the communication apparatus 100 is in the active state (state in which the communication apparatus 100 is transmitting the REQ 1).

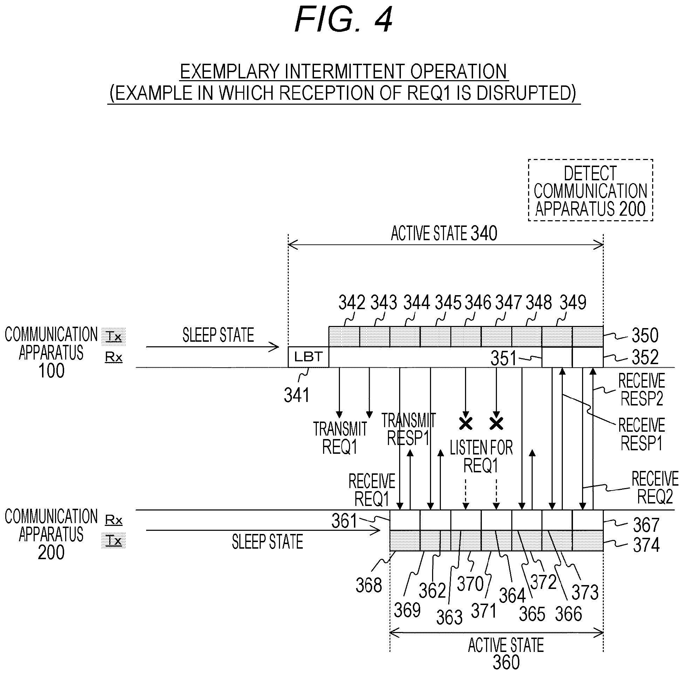

In this manner, in a case where the REQ 1 from the communication apparatus 100 is disrupted, it is desirable that the communication apparatus 200 maintains the active state and continues the listening operation for the REQ 1 until a predetermined period of time elapses after disruption of the REQ 1. Then, in a case where the REQ 1 from the communication apparatus 100 can be received within a certain period of time, the communication apparatus 200 thereafter continues to control to suppress the transition to the sleep state. This can raise the possibility that the communication apparatus 100 receives the RESP 1 and succeeds in detection of the communication apparatus 200. This example is illustrated in Fig. 4.

### [Exemplary Operation in a Case Where Listener Loses REQ 1 on the Way]

Fig. 4 is a diagram illustrating an example of communication in which data is exchanged between the communication apparatus 100 and the communication apparatus 200 according to the embodiment of the present technology.

Fig. 4 illustrates an example in which the communication apparatus 200 maintains the active state and continues the listening operation of the REQ 1 during a period from disruption of the REQ 1 until a predetermined period of time elapses in a case where the REQ 1 from the communication apparatus 100 is disrupted. That is, an example in which the communication apparatus 200 does not transition to the sleep state immediately after the REQ 1 is disrupted.

Specifically, in an active state 340, the communication apparatus 100 performs LBT (341) and then transmits an REQ 1 (342 to 349). The communication apparatus 100 further turns on the reception circuit only in one time segment to listen for the RESP 1 (351) in the active state 300.

Meanwhile, the communication apparatus 200 listens for the REQ 1 (361 to 366) in an active state 360. In this case, the communication apparatus 200 detects the REQ 1 (361 and 362). However, it is assumed that after detecting the REQ 1 the communication apparatus 200 cannot receive the REQ 1 due to some reason (for example, deterioration of communication environment) (363 and 364).

In this manner, even in a case where reception of the REQ 1 is disrupted on the way, the communication apparatus 200 does not immediately transition to the sleep state but continues to listen for the REQ 1 for a certain period of time (363 to 366). This can raise a possibility of successfully receiving the REQ 1 for example in a case where the communication environment is deteriorated and the REQ 1 is lost, and thereafter the communication environment is improved within a certain period of time.

Here, the certain period of time may be a fixed value (for example, about hundred time segments) or a variable value. In a case where the certain period of time is a variable value, for example, the value can be determined in accordance with the packet loss rate, the communication environment, or the like.

Furthermore, a condition for the communication apparatus 200 to continue to listen for a REQ 1 for a certain period of time may be set. For example, continuous reception of a REQ 1 for predetermined number of times (for example, twice) before the reception of the REQ 1 is disrupted in the way may be set as a condition.

Furthermore, in a case where the communication apparatus 200 receives the REQ 1 from the communication apparatus 100 within a certain period of time (365 and 366), the communication apparatus 200 transmits a RESP 1 to the communication apparatus 100 (372 and 373). Furthermore, in a case where the communication apparatus 200 receives a REQ 2 from the communication apparatus 100 after transmitting the RESP 1 (367), the communication apparatus 200 transmits a RESP 2 to the communication apparatus 100 (374).

In a case where the communication apparatus 100 receives the RESP 1 (351) if the reception circuit is on, the communication apparatus 100 transmits a REQ 2 to the communication apparatus 200 (350). Furthermore, in a case where the communication apparatus 100 receives a RESP 2 from the communication apparatus 200 after transmitting the REQ 2 (352), coupling with the communication apparatus 200 is completed.

### [Example of Notifying Listener of Timing at Which Talker Operates Reception Circuit]

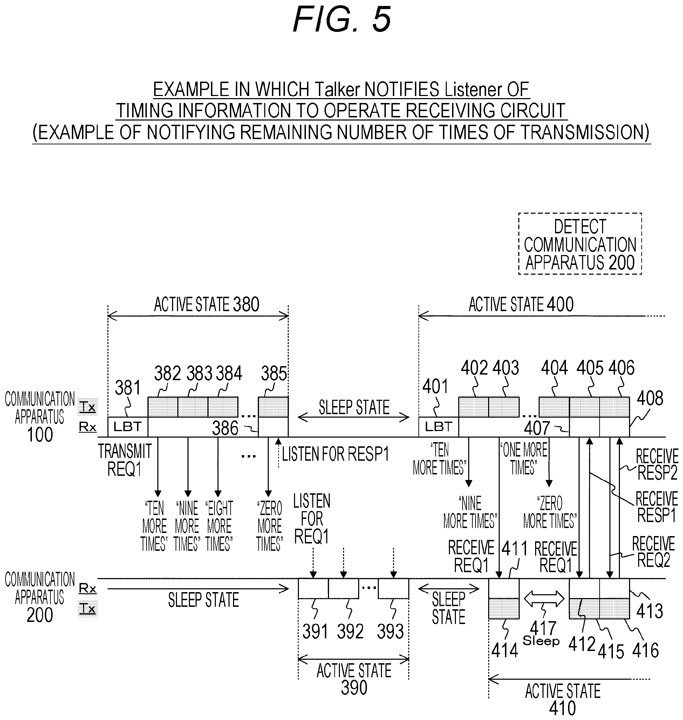

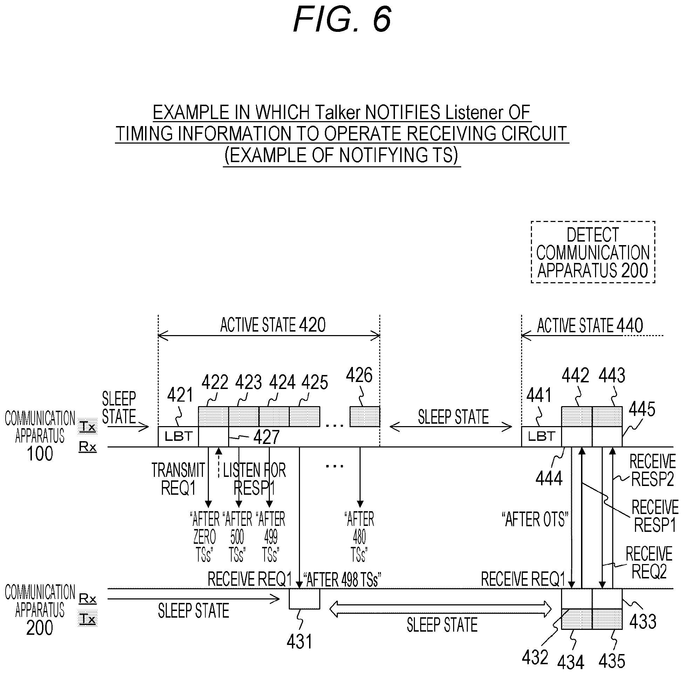

Next, an example in which a Talker notifies a Listener of a timing at which the Talker operates the reception circuit is illustrated. For example, by including information on the timing at which the Talker operates the reception circuit in a radio signal (for example, REQ 1) transmitted by the Talker, it is possible to notify the Listener of the timing to operate the reception circuit. As a result, the Listener can perform more advanced control. This example is illustrated in Figs. 5 and 6.

### [Example of Notifying the Remaining Number of Times of Transmission]

Fig. 5 is a diagram illustrating an example of communication in a case where data is exchanged between the communication apparatus 100 and the communication apparatus 200 according to an embodiment of the present technology.

In Fig. 5, an example is illustrated in which the communication apparatus 100 operates the reception circuit only for the last one time segment in an active state. In addition, Fig. 5 illustrates an example in which a REQ 1 frame is extended and the remaining number of times of transmitting the REQ 1 frame is included in the REQ 1 frame.

Note that operations of the communication apparatus 100 (LBT (381 and 401), transmission of a REQ 1 (382 to 385 and 402 to 405), and reception of a RESP 1 (386 and 407)) in the active states 380 and 400 correspond to the operations described above.

However, as described above, in case of transmitting the REQ 1 (382 to 385 and 402 to 405) the communication apparatus 100 includes, in the REQ 1 frame, information on the remaining number of times of transmitting the REQ 1 in the active states 380 and 400 to transmit the information.

In this manner, by extending the REQ 1 frame and notifying the communication apparatus 200 of a listening timing for the RESP 1, the communication apparatus 200 can grasp the listening timing for the RESP 1.

Note that operations of the communication apparatus 200 (reception of the REQ 1 (391 to 393)) in the active state 390 correspond to the operations described above.

In addition, in an active state 410, when receiving the REQ 1 frame (411), the communication apparatus 200 checks the "remaining number of times of transmission" included in the received REQ 1 frame. As a result, the communication apparatus 200 can grasp after how many time segments does the communication apparatus 200 transmit the RESP 1 to allow the communication apparatus 100 to receive the RESP 1.

Also, for example as a result of the confirmation, in a case where there is time until transmission of the RESP 1, the communication apparatus 200 can transition to and maintain the sleep state until transmission of the RESP 1 (417). This enables further reducing power consumption.

In this manner, the communication apparatus 200 having received the REQ 1 including the "remaining number of times of transmission" can cease the operation to reduce power consumption until the listening timing for the RESP 1. For example, in the example illustrated in Fig. 5, since the REQ 1 including "nine more times" is received (411) in the active state 410, the communication apparatus 200 can sleep for 8 time segments (417). Moreover, transmission of the RESP 1 (414) in this case may be omitted.

Then, the communication apparatus 200 transitions to the active state at a timing when the "remaining number of times of transmission" becomes zero and receives the REQ 1 from the communication apparatus 100 (412). This REQ 1 includes "zero more times".

Note that reception of the REQ 1 (412) and transmission of the RESP 1 (415) by the communication apparatus 200 and reception of the RESP 1 (407) and transmission of the REQ 2 (406) by the communication apparatus 100 correspond to the respective operations described above. Furthermore, reception of the REQ 2 (413) and transmission of the RESP 2 (416) by the communication apparatus 200 and reception of the RESP 2 (408) by the communication apparatus 100 correspond to the respective operations described above.

### [Example of Notifying TS]

Fig. 6 is a diagram illustrating an example of communication in which data is exchanged between the communication apparatus 100 and the communication apparatus 200 according to the embodiment of the present technology.

In Fig. 6, an example is illustrated in which the communication apparatus 100 operates the reception circuit operates only for the first one time segment at the head of the active state (after LBT). In addition, Fig. 6 illustrates an example in which a REQ 1 frame is extended and listening timing for the RESP 1 is included in the REQ 1 frame.

Note that operations of the communication apparatus 100 (LBT (421 and 441), transmission of the REQ 1 (422 to 426 and 442), and reception of the RESP 1 (427 and 444)) in the active states 420 and 440 correspond to the operations described above.

However, as described above, in case of transmitting the REQ 1 (422 to 426 and 442), the communication apparatus 100 includes information on the listening timing of the RESP 1 in the REQ 1 frame and transmits the information. Note that in Fig. 6, an example is illustrated in which information specifying after how many time segments (TSs) the listening timing for the RESP 1 is set is included in the REQ 1 frame.

In this manner, by extending the REQ 1 frame and notifying the communication apparatus 200 of a listening timing for the RESP 1, the communication apparatus 200 can grasp the listening timing for the RESP 1.

In a case where receiving the REQ 1 (431), the communication apparatus 200 transmits the RESP 1 (434) in accordance with the information (listening timing for the RESP 1) included in the REQ 1. In this case, the communication apparatus 200 can transition to and maintain the sleep state from reception of the REQ 1 (431) to transmission of the RESP 1 (434), thereby reducing power consumption. In this case, the communication apparatus 200 controls the sleep state and the active state regardless of preset cycles of the sleep state and the active state.

In this manner, on the basis of the information included in the received REQ 1, the communication apparatus 200 calculates after how many time segments the RESP 1 is to be responded. Then, the communication apparatus 200 transmits the RESP 1 at a timing obtained by the calculation (434) . In this case, when the timing obtained by the calculation corresponds to the sleep state in the communication apparatus 200, the communication apparatus 200 controls to transition to the active state at that timing.

Note that in Fig. 6, an example is illustrated in which a timing of the next reception operation is stored in REQ 1 in units of time segments; however, other units may be used. For example, units of microseconds may be used.

Note that reception of the REQ 1 (432) and transmission of the RESP 1 (434) by the communication apparatus 200 and reception of the RESP 1 (444) and transmission of the REQ 2 (443) by the communication apparatus 100 correspond to the respective operations described above. Furthermore, reception of the REQ 2 (433) and transmission of the RESP 2 (435) by the communication apparatus 200 and reception of the RESP 2 (445) by the communication apparatus 100 correspond to the respective operations described above.

In this manner, the control unit 143 of the communication apparatus 100 can include, in the REQ 1, the timing information on the timing at which the communication apparatus 100 performs reception processing of the response frame (RESP 1) to the REQ 1 (specific frame) to transmit the information.

Furthermore, in a case where the timing information is included in the REQ 1, a control unit of the communication apparatus 200 can control to transmit the RESP 1 to the communication apparatus 100 on the basis of the timing. In this case, the control unit of the communication apparatus 200 can control to transition to and maintain the sleep state until the timing at which the communication apparatus 100 performs the reception processing of the RESP 1.

### [Exemplary Operation of Communication Apparatus Activated as Talker upon Initiation of Association]

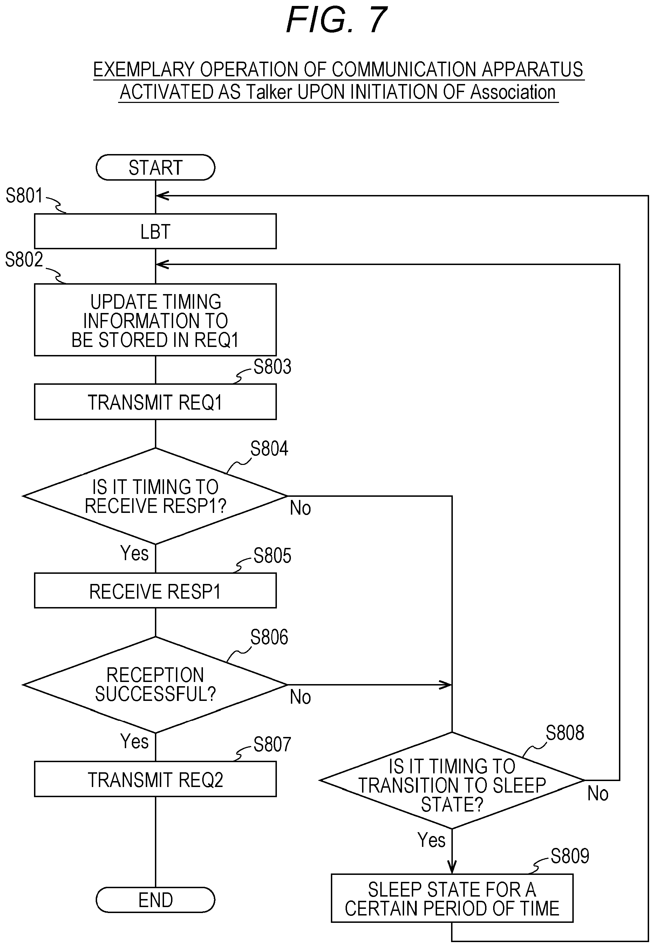

Fig. 7 is a flowchart illustrating an example of a processing procedure of data communication processing by the communication apparatus 100 according to the embodiment of the present technology.

First, the control unit 143 of the communication apparatus 100 executes LBT (step S801). Then, the control unit 143 of the communication apparatus 100 updates timing information to be stored in a REQ 1 (step S802) . For example as illustrated in Fig. 5, in a case where the "remaining number of times of transmission" is stored as the timing information, the remaining number of times of transmitting the REQ 1 is updated. Alternatively, for example as illustrated in Fig. 6, in a case where "TS (listening timing for a RESP 1)" is stored as the timing information, TS is updated. Note that as illustrated in Figs. 3 and 4, in a case where the timing information is not transmitted, update processing of the timing information (step S802) can be omitted.

Subsequently, the control unit 143 of the communication apparatus 100 performs transmission processing of transmitting the REQ 1 (step S803) . That is, the control unit 143 of the communication apparatus 100 causes the information providing unit 141 to output the REQ 1 frame from the information providing unit 141 to the transmission unit 120 and causes the transmission unit 120 to transmit the REQ 1 frame to the communication apparatus 200 (step S803) . In this case, the control unit 143 of the communication apparatus 100 causes the REQ 1 frame to be transmitted at a timing of an allocated TDS.

Then, the control unit 143 of the communication apparatus 100 determines whether it is timing to receive a RESP 1 (step S804). Here, a criterion used for determining whether it is a timing to receive the RESP 1 is different depending on the respective examples described above. For example, in the example illustrated in Fig. 5, a reception timing is ten time segments after the LBT. Alternatively, for example in the example illustrated in Fig. 6, a reception timing is one time segment immediately after the LBT.

In a case where it is the timing to receive the RESP 1 (step S804), the control unit 143 of the communication apparatus 100 performs reception processing to receive the RESP 1 (step S805). That is, the control unit 143 of the communication apparatus 100 turns on the reception circuit of the reception unit 130. Then, the reception unit 130 of the communication apparatus 100 receives the RESP 1 frame from the communication apparatus 200. In this case, the control unit 143 of the communication apparatus 100 controls to receive a RESP 1 frame at a timing of an allocated TDS. Then, the control unit 143 of the communication apparatus 100 acquires the RESP 1 frame from the communication apparatus 200 from the information acquiring unit 142.

Subsequently, the control unit 143 of the communication apparatus 100 determines whether reception of the RESP 1 has been successful (step S806). In a case where reception of the RESP 1 has failed (step S806), the flow proceeds to step S808.

Alternatively, in a case where reception of the RESP 1 has been successful (step S806), the control unit 143 of the communication apparatus 100 performs transmission processing of transmitting a REQ 2 (step S807). Note that descriptions on subsequent respective processing are omitted.

Moreover, in a case where it is not the timing to receive the RESP 1 (step S804), the control unit 143 of the communication apparatus 100 determines whether it is a timing to transition to the sleep state (step S808) . In a case where it is not the timing to transition to the sleep state (step S808), the flow returns to step S802. In this manner, in the active state, the REQ 1 is periodically transmitted (step S803) .

On the other hand, in a case where it is the timing to transition to the sleep state (step S808), the control unit 143 of the communication apparatus 100 transitions to and maintain the sleep state for a certain period of time (a preset sleep period) (step S809) . Note that steps S801 to S807 are one example of a control procedure described in the claims.

In this manner, out of an active state in which an association request is made to the communication apparatus 200, the control unit 143 of the communication apparatus 100 performs transmission and reception processing of a frame in a specific period and controls to perform transmission processing of a frame in another period. Specifically, the control unit 143 of the communication apparatus 100 performs LBT first in an active state and controls a period after this LBT to be the specific period and the other period. In this case, the control unit 143 of the communication apparatus 100 can set any one of the period immediately after the LBT, the last period in the active state, and an intermediate period in the active state as the specific period.

Furthermore, in the other period, transmission processing (for example, 302, 303, and 322 to 325 illustrated in Fig. 3) of the association request frame (REQ 1) for performing the association request is performed. Moreover, in the specific period, transmission processing of the association request frame (REQ 1) (for example, 326 illustrated in Fig. 3) and reception processing of the response frame (RESP 1) to the association request frame (for example, 328 illustrated in Fig. 3) are performed.

Furthermore, the control unit 143 of the communication apparatus 100 controls to add information on a timing of performing the transmission and reception processing (timing information) to a frame transmitted in transmission and reception processing or transmission processing.

### [Exemplary Operation of Communication Apparatus Activated as Listener upon Initiation of Association]

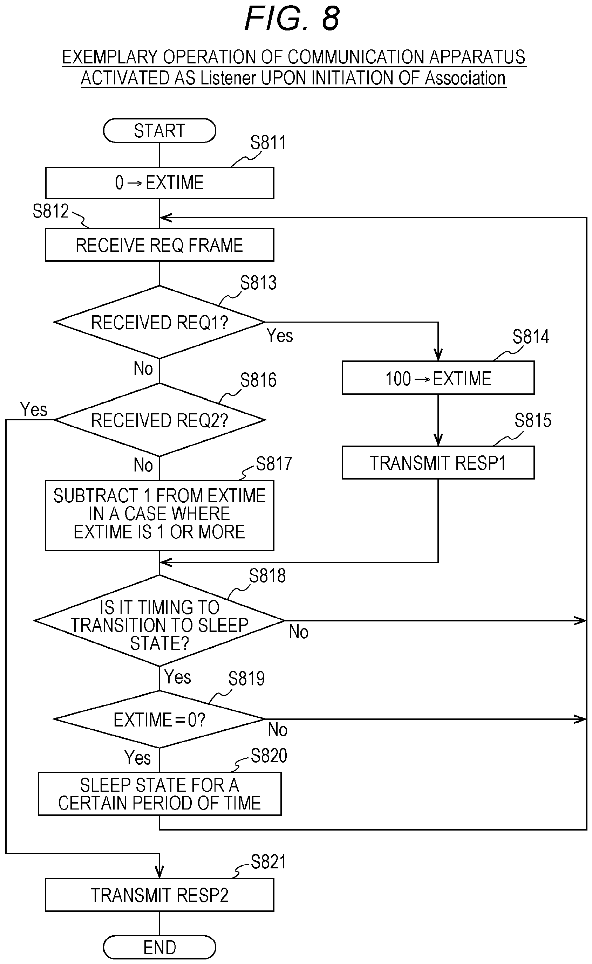

Fig. 8 is a flowchart illustrating an example of a processing procedure of data communication processing by the communication apparatus 200 according to the embodiment of the present technology. Fig. 8 illustrates an example in which a variable Extended TIME (EXTIME) is used so as to correspond to the example illustrated in Fig. 4 (an example of not immediately transitioning to the sleep state).

First, the control unit (corresponding to the control unit 143 illustrated in Fig. 1) of the communication apparatus 200 initializes the variable EXTIME to "0" (step S811). Subsequently, the control unit of the communication apparatus 200 performs reception processing to receive the REQ frame (step S812) . In the reception processing of this REQ frame, both of the REQ 1 and the REQ 2 frames are listened for at the same time, and respective processing is performed in accordance with the received frame.

In a case where the REQ 1 is received (step S813), the control unit of the communication apparatus 200 substitutes a predetermined value (for example, 100) into the variable EXTIME (step S814). Subsequently, the control unit of the communication apparatus 200 performs transmission processing to transmit the RESP 1 (step S815).

In a case where the REQ 1 has not been received (step S813), the control unit of the communication apparatus 200 determines whether the REQ 2 has been received (step S816) . In a case where the REQ 2 has been received (step S816), the control unit of the communication apparatus 200 performs transmission processing to transmit the RESP 2 (step S821). Note that descriptions on subsequent respective processing are omitted.

In a case where the REQ 2 has not been received (step S816), the control unit of the communication apparatus 200 checks whether the variable EXTIME is 1 or more, and in a case where the variable EXTIME is 1 or more, 1 is subtracted from the variable EXTIME (Step S817). Note that in a case where the variable EXTIME is 0, subtraction is not performed.

Then, the control unit of the communication apparatus 200 determines whether it is a timing to transition to the sleep state (step S818) . In a case where it is not the timing to transition to the sleep state (step S818), the flow returns to step S812. In this manner, in the active state, reception processing of the REQ frame is periodically performed (step S812) .

In a case where it is the timing to transition to the sleep state (step S818), the control unit of the communication apparatus 200 determines whether the variable EXTIME is 0 (step S819) . In a case where the variable EXTIME is 1 or more (step S819), the flow returns to step S812. On the other hand, in a case where the variable EXTIME is 0 (step S819), the control unit of the communication apparatus 200 transitions to the sleep state for a certain period of time (preset sleep period) (step S820).

In this manner, if neither the REQ 1 nor the REQ 2 has been received (steps S813 and S816), the value of the variable EXTIME is subtracted by one. This enables suppressing transition to the sleep state within hundred time segments since the last time REQ 1 has been received. Note that steps S811 to S820 are one example of a control procedure described in the claims.

In this manner, the control unit of the communication apparatus 200 performs control to switch between the active state of accepting the association request and the sleep state of not accepting the association request at a predetermined timing. Furthermore, in a case where the REQ 1 (specific frame) is received from the communication apparatus 100 in the active state, the control unit of the communication apparatus 200 controls to suppress transition to the sleep state and to maintain the active state. Specifically, the control unit of the communication apparatus 200 controls to maintain the active state while receiving the REQ 1 (specific frame). Furthermore, in a case where the specific frame is no longer received after receiving the REQ 1 (specific frame), the control unit of the communication apparatus 200 controls to maintain the active state for a predetermined period of time after reception of the REQ 1 (specific frame) has stopped.

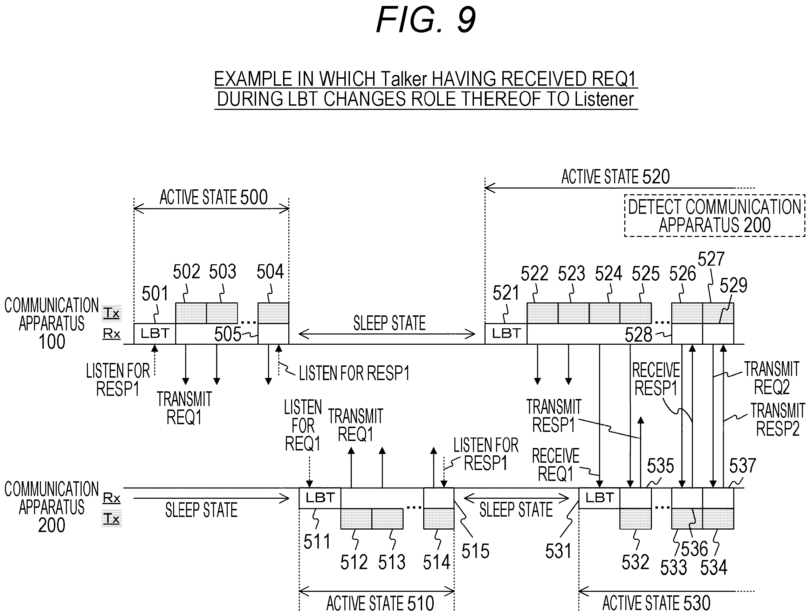

As described above, according to the embodiment of the present technology, it is possible to reduce power consumption by reducing time to operate the reception circuit on the Talker side. In this case, the Listener side continuously performs reception operation. Therefore, if the power consumption of the Listener side can also be reduced, power consumption of the entire communication system can be further reduced. This example is thus illustrated in Fig. 9.

### [Example in Which Talker Receiving REQ 1 During LBT Changes Role Thereof to Listener]

Fig. 9 is a diagram illustrating an example of communication in which data is exchanged between the communication apparatus 100 and the communication apparatus 200 according to the embodiment of the present technology.

In the above description, the example is illustrated in which roles are fixed with a Talker transmitting the REQ 1 corresponding to the communication apparatus 100 and a Listener receiving the REQ 1 corresponding to the communication apparatus 200. Fig. 9 illustrates an example in which both of the communication apparatus 100 and the communication apparatus 200 have the function of transmitting a REQ 1 to each other. Moreover, an example is illustrated in which one of the communication apparatuses having received a REQ 1 during LBT changes a role thereof from a Talker to a Listener. That is, in Fig. 9, an example is illustrated in which the communication apparatus 100 and the communication apparatus 200 initiate operation as a Talker, but reception of the REQ 1 from the other party during the LBT results in operation as a Listener thereafter.

The communication apparatus 100 and the communication apparatus 200 monitor a frame from the other party in the LBT sections (501, 511, 521 and 531) before transmission of the REQ 1. Then, in the LBT section, the communication apparatus having detected the REQ 1 from the other party changes a role thereof to perform the operation of listening for the REQ 1 (operation of the Listener described above).

Moreover, in a case where the REQ 1 from the other party is not detected, the communication apparatus 100 and the communication apparatus 200 continue to transmit the REQ 1 (502 to 504, 512 to 514, and 522 to 526) and listen for the RESP 1 in a part of the sections (505, 515 and 528).

Specifically, it is assumed that the communication apparatus 200 receives the REQ 1 transmitted by the communication apparatus 100 in the LBT section (531) . In this case, the communication apparatus 200 changes a role thereof from the Talker to a Listener and listens for the REQ 1 (535 and 536). Then, in a case where the REQ 1 is received (535 and 536), the communication apparatus 200 transmits the RESP 1 (532 and 533).

Note that reception of the RESP 1 (528) and transmission (527) of the REQ 2 by the communication apparatus 100 correspond to the respective operations described above. Furthermore, reception of the REQ 2 (537) and transmission of the RESP 2 (534) by the communication apparatus 200 and reception of the RESP 2 (529) by the communication apparatus 100 correspond to the respective operations described above.

In this manner, both of the communication apparatus 100 and the communication apparatus 200 first perform an operation corresponding to a Talker, thereby enabling reduction in the reception operation of the entire communication system.

### [Exemplary Operation of Communication Apparatus Changing Role After Initiation of Association]

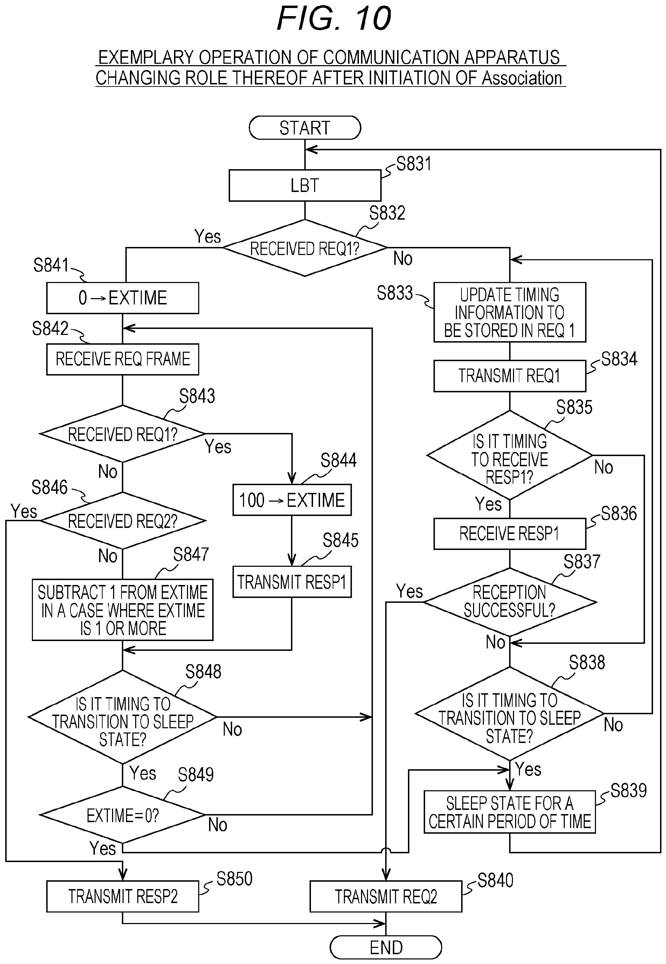

Fig. 10 is a flowchart illustrating an example of a processing procedure of data communication processing by the communication apparatus 200 according to the embodiment of the present technology. Fig. 10 illustrates an exemplary operation corresponding to Fig. 9.

First, the control unit (corresponding to the control unit 143 illustrated in Fig. 1) of the communication apparatus 200 executes LBT (step S831) . Subsequently, the control unit of the communication apparatus 200 determines whether a REQ 1 has been received in the LBT section (step S832).

In a case where the REQ 1 is received in the LBT section (step S832), the flow proceeds to step S841. Note that the subsequent respective processing (steps S839 and S841 to S850) correspond to the respective processing (steps S811 to S821) illustrated in Fig. 8.

In a case where the REQ 1 has not been received in the LBT section (step S832), the flow proceeds to step S833. Note that the subsequent respective processing (steps S833 to S840) correspond to the respective processing (steps S802 to S809) illustrated in Fig. 7.

In this manner, the subsequent respective processing is changed in accordance with a result (step S832) during the first LBT.

As described above, in a case where the association request (REQ 1) is received from the other communication apparatus while performing the LBT in the active state, the control unit of the communication apparatus 200 controls to change the role of the communication apparatus 200 from the Talker to a Listener.

As described above, according to the embodiment of the present technology, when the communication apparatus of the ECMA-401 specification performs intermittent operation (for example, operation in which the active state and the sleep state are periodically alternately repeated), the communication apparatus can suppress the sleep operation on the basis of the frame transmitted from the other party.

For example, when the communication apparatus of the ECMA-401 specification searches for another party using intermittent operation, it is possible to implement low power consumption by reducing the time for performing reception operation. For example, the Talker continues to transmit a radio frame during the active state; however, a section in which the reception circuit is turned on is only the predetermined section (for example, last few frames). Also, the Listener returns a response when receiving a radio frame during the active state. However, as long as the other party continues to transmit the wireless frame, the Listener does not enter the sleep state and continues to return a response. This enables reducing power consumption on the Talker side.

As described above, according to the embodiment of the present technology, it is possible to reduce power consumption during the listening operation on the Talker side without significantly increasing time required for finding an apparatus. Thus, for example, even in a case where a battery of the same capacity is used, listening time can be longer.

In addition, it is said that the communication by the ECMA-401 has relatively high power consumption in reception processing than that of transmission processing as compared to other wireless communication. Therefore, in the embodiment of the present technology, the reception circuit is halted while the transmission circuit kept operative, thereby enabling implementation of power saving utilizing characteristics of the ECMA-401.

In addition, as illustrated in Fig. 5 and Fig. 6, it is possible to notify timing information from the Talker to the Listener. As a result, the Listener can prevent uselessly transmitting the REQ 1 to consume power during the period from reception of the REQ 1 to transmission of the RESP 1.

Furthermore, the communication apparatuses 100 and 200 according to the embodiments of the present technology can be applied to apparatuses used in respective fields. For example, a case is assumed in which, in a case where a person is wearing earphones on both ears, an input destination of the earphones is changed in accordance with an apparatus (for example, smartphone or tablet terminal) that the person holds in a hand. In this case, it is possible to output to the earphones quickly and accurately in accordance with the apparatus held in the hand.

Furthermore, for example, applications to a medical apparatus to be worn on a human body, an apparatus to be mounted on an automobile, and an apparatus installed at a ticket gate of a station are possible. Examples of an apparatus mounted on an automobile include an apparatus that detects the position of a seat on which a person sits and an apparatus that detects the state of a person holding a steering wheel. Furthermore, an apparatus installed at a ticket gate of a station authenticates somewhat by being touched by a human body, for example. Furthermore, application to, for example, an apparatus used in the agricultural field (for example, a terminal of a cattle management system) is also possible. Likewise, application is possible to respective apparatuses used in the field of sport, the medical field, or the like, for example.

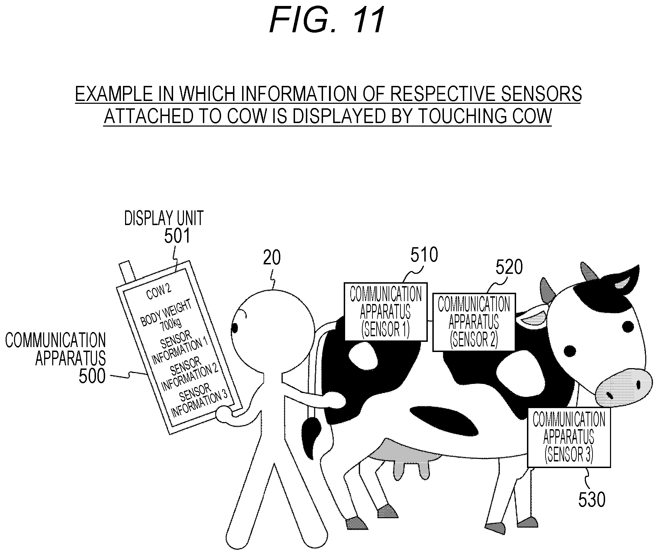

Furthermore, application is also possible to an apparatus attached to a body other than a human body (for example, animals such as a cattle, a horse, a dog, and a cat) . Moreover, application is also possible to apparatuses attached to a plurality of bodies (for example, a human body and a body of a cattle) . This example is illustrated in Fig. 11.

### [Example of Communication among a Plurality of Apparatuses Attached to Body]

Fig. 11 is a diagram illustrating an example of communication in a case where data is exchanged among communication apparatuses 500, 510, 520, and 530 of an embodiment of the present technology.

Fig. 11 illustrates an example in which the communication apparatus 500 is first activated as a Listener and the communication apparatuses 510, 520, and 530 are activated as Talkers. Furthermore, the communication apparatus 500 corresponds to the communication apparatus 200, and the communication apparatuses 510, 520, and 530 correspond to the communication apparatus 100. Moreover,

Fig. 11 illustrates an example of a case where the communication apparatus 500 is carried by a person 20, and the communication apparatuses 510, 520, and 530 are attached to a cattle.

Furthermore, the communication apparatus 500 is an information processing apparatus such as a smartphone, and a tablet terminal. In addition, the communication apparatuses 510, 520, and 530 are sensors that perform various measurements related to a cattle. The sensors may be, for example, a sensor apparatus (pH measuring apparatus) (an apparatus to be attached to a cattle's stomach as a communication apparatus) capable of measuring potential hydrogen or power of hydrogen (pH). Alternatively, for example, the sensors may be a sensor apparatus (thermometer for cattle) (an apparatus to be attached to a cattle as a communication apparatus) capable of measuring a body temperature of the cattle.

The communication apparatuses 510, 520, and 530 are capable of transmitting, to the communication apparatus 500, respective sensor information (including identification information for identifying a cattle) acquired by the respective sensors by using communication in which bodies (human body and cow body) are used as a transmission medium of a signal.

For example, when the person 20 holds the communication apparatus 500 on the left hand and places the right hand on the cattle, in accordance with the aforementioned transmission and reception timing, the communication apparatus 500 and the communication apparatuses 510, 520, and 530 can exchange the respective sensor information. In this case, the person 20 sequentially selects an apparatus to be coupled to the communication apparatus 500 by selection operation using a display unit 501 (touch panel) to sequentially exchange the respective sensor information with the communication apparatuses 510, 520, and 530.

Furthermore, a control unit of the communication apparatus 500 (corresponding to the control unit 143 illustrated in Fig. 1) can display the received respective sensor information and identification information (for example, name) for identifying a cattle on the display unit 501. In this manner, when the person 20 places the right hand on the cattle, this allows the display unit 501 of the communication apparatus 500 held in the left hand to display the respective sensor information and a name of the cattle.

Note that in Fig. 11, for ease of explanation, an example in which three communication apparatuses are attached to one cattle is illustrated; however, similar application is possible also in a case of attaching one, two, four, or more communication apparatuses to one cow.

Note that the embodiments described above illustrate an example for embodying the present technology, and matters of the embodiments and matters specifying the invention in the claims correspond with each other. Likewise, matters specifying the invention in the claims and matters of the embodiments of the present technology denoted by the same names as those thereof correspond with each other. However, the present technology is not limited to the embodiments, and can be embodied by applying various modifications to the embodiments without departing from the principles thereof.

In addition, the processing procedure described in the above embodiments may be regarded as a method having a series of the procedures, or as a program for causing a computer to execute a series of the procedures or as a recording medium for storing the program. As this recording medium, for example, a compact disc (CD), a mini disc (MD), a digital versatile disc (DVD), a memory card, a Blu-ray (registered trademark) disc, or the like may be used.

Note that the effects described herein are merely examples and thus are limited. Other effects may also be included.

### REFERENCE SIGNS LIST

- 50, 60, 100, 200, 500, 510, 520, 530: Communication apparatus
- 110: Electrode
- 120: Transmission unit
- 130: Reception unit
- 140: Processing unit
- 141: Information providing unit
- 142: Information acquiring unit
- 143: Control unit
- 150: Storage unit
- 501: Display unit

## Claims

1. A communication apparatus (50, 100, 510, 520, 530), for communication with another communication apparatus in which a body (20) is used as a transmission medium of a signal, and in which power consumption of reception processing is higher than that of transmission processing, comprising:
a control unit (143) which is configured to, out of an active period in which an association request is made to the other communication apparatus (60, 200, 500),
control to perform transmission and reception processing of a frame in a specific period, and
control to perform transmission processing of a frame in another period ,
**characterized in that** timing information on a timing at which the communication apparatus (50, 100, 510, 520, 530) performs reception processing of a response frame to the frame in the specific period is included in the frame in the specific period.

2. The communication apparatus (50, 100, 510, 520, 530) according to claim 1,
wherein the control unit (143) is configured to control to perform Listen Before Talk, LBT, first in the active period and to set a period after the LBT as the specific period and another period after the LBT as the other period.

3. The communication apparatus (50, 100, 510, 520, 530) according to claim 2,
wherein the control unit (143) is configured to control to set, as the specific period, any one of a period immediately after the LBT, a last period in the active period, and an intermediate period in the active period.

4. The communication apparatus (50, 100, 510, 520, 530) according to claim 1,
wherein the control unit (143) is configured to control to add information on a timing of performing the transmission and reception processing to a frame transmitted in the transmission and reception processing or the transmission processing.

5. The communication apparatus (50, 100, 510, 520, 530) according to claim 1,
wherein the control unit (143) is configured to control to perform transmission processing of an association request frame for performing the association request in the other period, and
perform transmission processing of another association request frame for performing the association request in the specific period and perform reception processing of a response frame to the association request in the specific period.

6. The communication apparatus (50, 100, 510, 520, 530) according to claim 2,
wherein the communication is data exchange conforming to the ECMA-401 specification,
the communication apparatus (50, 100, 510, 520, 530) is activated as a Talker performing the association request, and
in a case where the association request is accepted from the other communication apparatus while the LBT is performed in the active period, the control unit (143) controls to change a role of the communication apparatus from the Talker to a Listener.

7. A communication apparatus (60, 200, 500), for communication with another communication apparatus in which a body (20) is used as a transmission medium of a signal, and in which power consumption of reception processing is higher than that of transmission processing, comprising:
a control unit (143) which is configured to
control to switch between an active period in which an association request is accepted and a sleep period in which the association request is not accepted at a predetermined timing and, when a specific frame is received from another communication apparatus (50, 100, 510, 520, 530) in the active period, to suppress transition to the sleep period to maintain the active period,
**characterized in that**, timing information on a timing at which the other communication apparatus (50, 100, 510, 520, 530) performs reception processing of a response frame to the specific frame is included in the specific frame, the control unit (143) controls to transmit the response frame to the other communication apparatus (50, 100, 510, 520, 530) on the basis of the timing.

8. The communication apparatus (60, 200, 500) according to claim 7,
wherein the control unit (143) is configured to control to maintain the active period while receiving the specific frame, and after receiving the specific frame, to maintain the active period for a predetermined period of time after reception of the specific frame has stopped.

9. The communication apparatus (60, 200, 500) according to claim 7,
wherein the control unit (143) is configured to control to transition to and maintain the sleep period until the timing at which the other communication apparatus (50, 100, 510, 520, 530) performs the reception processing of the response frame.

10. A communication system, comprising:
a first communication apparatus (50, 100, 510, 520, 530) according to the communication apparatus of any of claims 1 to 6 and a second communication apparatus (60, 200, 500) according to the communication apparatus according to any of claims 7 to 9.

11. A communication method for communication of a communication apparatus with another communication apparatus in which a body (20) is used as a transmission medium of a signal, and in which power consumption of reception processing is higher than that of transmission processing, comprising a control procedure of:
out of an active period in which an association request is made from the communication apparatus to the other communication apparatus (60, 200, 500), performing transmission and reception processing of a frame in a specific period and performing transmission processing of a frame in another period,
**characterized by** including, in the frame in the specific period, timing information on a timing at which reception processing of a response frame to the frame in the specific period is performed.

12. A communication method for communication of a communication apparatus with another communication apparatus in which a body (20) is used as a transmission medium of a signal, and in which power consumption of reception processing is higher than that of transmission processing, the method comprising a control procedure, the control procedure including the steps of:
switching between an active period in which an association request is accepted and a sleep period in which the association request is not accepted at a predetermined timing and, when a specific frame is received from the other communication apparatus (50, 100, 510, 520, 530) in the active period, suppressing transition to the sleep period to maintain the active period,
**characterized in that** timing information on a timing at which the other communication apparatus (50, 100, 510, 520, 530) performs reception processing of a response frame to the specific frame is included in the specific frame, transmitting the response frame to the other communication apparatus (50, 100, 510, 520, 530) on the basis of the timing.

13. A program for causing a computer to execute a control procedure according to the method as claimed in claim 11.

14. A program for causing a computer to execute a control procedure according to the method as claimed in claim 12.

## Patentansprüche

1. Kommunikationsvorrichtung (50, 100, 510, 520, 530), zur Kommunikation mit einer anderen Kommunikationsvorrichtung, in der ein Körper (20) als ein Übertragungsmedium eines Signals verwendet wird und in der der Leistungsverbrauch von Empfangsverarbeitung höher als der von Übertragungsverarbeitung ist, umfassend:
eine Steuereinheit (143), die konfiguriert ist zum, aus einer aktiven Periode, in der eine Assoziationsanforderung an die andere Kommunikationsvorrichtung (60, 200, 500) vorgenommen wird,
Steuern, um Übertragungs- und Empfangsverarbeitung eines Rahmens in einer spezifischen Periode durchzuführen, und
Steuern, um Übertragungsverarbeitung eines Rahmens in einer anderen Periode durchzuführen,
**dadurch gekennzeichnet, dass** Zeitinformationen einer Zeit, zu der die Kommunikationsvorrichtung (50, 100, 510, 520, 530) Empfangsverarbeitung eines Antwortrahmens auf den Rahmen in der spezifischen Periode durchführt, in dem Rahmen in der spezifischen Periode enthalten sind.

2. Kommunikationsvorrichtung (50, 100, 510, 520, 530) nach Anspruch 1,
wobei die Steuereinheit (143) konfiguriert ist zum Steuern, um Hören vor Sprechen, LBT, zuerst in der aktiven Periode durchzuführen und um eine Periode nach dem LBT als die spezifische Periode und eine andere Periode nach dem LBT als die andere Periode einzustellen.

3. Kommunikationsvorrichtung (50, 100, 510, 520, 530) nach Anspruch 2,
wobei die Steuereinheit (143) konfiguriert ist zum Steuern, um eine beliebige einer Periode unmittelbar nach dem LBT, einer letzten Periode in der aktiven Periode und einer zwischenliegenden Periode in der aktiven Periode als die spezifische Periode einzustellen.

4. Kommunikationsvorrichtung (50, 100, 510, 520, 530) nach Anspruch 1,
wobei die Steuereinheit (143) konfiguriert ist zum Steuern, um Informationen über eine Zeit der Durchführung der Übertragungs- und Empfangsverarbeitung zu einem Rahmen, der in der Übertragungs- und Empfangsverarbeitung oder der Übertragungsverarbeitung übertragen wird, hinzuzufügen.

5. Kommunikationsvorrichtung (50, 100, 510, 520, 530) nach Anspruch 1,
wobei die Steuereinheit (143) konfiguriert ist zum Steuern, um
Übertragungsverarbeitung eines Assoziationsanforderungsrahmens zum Durchführen der Assoziationsanforderung in der anderen Periode durchzuführen und
Übertragungsverarbeitung eines anderen Assoziationsanforderungsrahmens zum Durchführen der Assoziationsanforderung in der spezifischen Periode durchzuführen und Empfangsverarbeitung eines Antwortrahmens auf die Assoziationsanforderung in der spezifischen Periode durchzuführen.

6. Kommunikationsvorrichtung (50, 100, 510, 520, 530) nach Anspruch 2,
wobei die Kommunikation Datenaustausch ist, die der Spezifikation ECMA-401 entspricht,
die Kommunikationsvorrichtung (50, 100, 510, 520, 530) als ein Sprechender aktiviert wird, der die Assoziationsanforderung durchführt, und
in einem Fall, in dem die Assoziationsanforderung von der anderen Kommunikationsvorrichtung angenommen wird, während das LBT in der aktiven Periode durchgeführt wird, die Steuereinheit (143) steuert, um eine Rolle der Kommunikationsvorrichtung von dem Sprechenden zu einem Hörenden zu ändern.

7. Kommunikationsvorrichtung (60, 200, 500) zur Kommunikation mit einer anderen Kommunikationsvorrichtung, in der ein Körper (20) als ein Übertragungsmedium eines Signals verwendet wird und in der der Leistungsverbrauch von Empfangsverarbeitung höher als der der Übertragungsverarbeitung ist, umfassend:
eine Steuereinheit (143), die konfiguriert ist zum Steuern, um zwischen einer aktiven Periode, in der eine Assoziationsanforderung angenommen wird, und einer Ruheperiode, in der die Assoziationsanforderung nicht angenommen wird, zu einer im Voraus bestimmten Zeit zu wechseln, und,
wenn ein spezifischer Rahmen von einer anderen Kommunikationsvorrichtung (50, 100, 510, 520, 530) in der aktiven Periode empfangen wird, einen Übergang in die Ruheperiode zu unterdrücken, um die aktive Periode beizubehalten,
**dadurch gekennzeichnet, dass** Zeitinformationen einer Zeit, zu der die andere Kommunikationsvorrichtung (50, 100, 510, 520, 530) Empfangsverarbeitung eines Antwortrahmen auf den spezifischen Rahmen durchführt, in dem spezifischen Rahmen enthalten ist, wobei die Steuereinheit (143) steuert, um den Antwortrahmen an die andere Kommunikationsvorrichtung (50, 100, 510, 520, 530) auf der Basis der Zeit zu übertragen.

8. Kommunikationsvorrichtung (60, 200, 500) nach Anspruch 7,
wobei die Steuereinheit (143) konfiguriert ist zum Steuern, um die aktive Periode während des Empfangens des spezifischen Rahmens beizubehalten und um nach dem Empfangen des spezifischen Rahmens die aktive Periode eine im Voraus bestimmte Zeitperiode beizubehalten, nachdem der Empfang des spezifischen Rahmens beendet ist.

9. Kommunikationsvorrichtung (60, 200, 500) nach Anspruch 7,
wobei die Steuereinheit (143) konfiguriert ist zum Steuern, um in die Ruheperiode überzugehen und diese bis zu der Zeit beizubehalten, zu der die andere Kommunikationsvorrichtung (50, 100, 510, 520, 530) die Empfangsverarbeitung des Antwortrahmens durchführt.

10. Kommunikationssystem, umfassend:
eine erste Kommunikationsvorrichtung (50, 100, 510, 520, 530) gemäß der Kommunikationsvorrichtung nach einem der Ansprüche 1 bis 6 und eine zweite Kommunikationsvorrichtung (60, 200, 500) gemäß der Kommunikationsvorrichtung nach einem der Ansprüche 7 bis 9.

11. Kommunikationsverfahren zur Kommunikation einer Kommunikationsvorrichtung mit einer anderen Kommunikationsvorrichtung, in der ein Körper (20) als ein Übertragungsmedium eines Signals verwendet wird und in der der Leistungsverbrauch von Empfangsverarbeitung höher als der von Übertragungsverarbeitung ist,
umfassend eine Steuerungsprozedur, bestehend aus:
aus einer aktiven Periode, in der eine Assoziationsanforderung von der Kommunikationsvorrichtung an die andere Kommunikationsvorrichtung (60, 200, 500) vorgenommen wird, Durchführen von Übertragungs- und Empfangsverarbeitung eines Rahmens in einer spezifischen Periode und Durchführen von Übertragungsverarbeitung eines Rahmens in einer anderen Periode,
**dadurch gekennzeichnet, dass** in dem Rahmen in der spezifischen Periode Zeitinformationen über eine Zeit, zu der Empfangsverarbeitung eines Antwortrahmens auf den Rahmen in der spezifischen Periode durchgeführt wird, enthalten sind.

12. Kommunikationsverfahren zur Kommunikation einer Kommunikationsvorrichtung mit einer anderen Kommunikationsvorrichtung, in der ein Körper (20) als ein Übertragungsmedium eines Signals verwendet wird und in der der Leistungsverbrauch von Empfangsverarbeitung höher als der von Übertragungsverarbeitung ist, das Verfahren eine Steuerungsprozedur umfassend, die Steuerungsprozedur die folgenden Schritte enthaltend:
Wechseln zwischen einer aktiven Periode, in der eine Assoziationsanforderung angenommen wird, und einer Ruheperiode, in der die Assoziationsanforderung nicht angenommen wird, zu einer im Voraus bestimmten Zeit und, wenn ein spezifischer Rahmen von der anderen Kommunikationsvorrichtung (50, 100, 510, 520, 530) in der aktiven Periode empfangen wird, Unterdrücken eines Übergangs in die Ruheperiode, um die aktive Periode beizubehalten,
**dadurch gekennzeichnet, dass**
Zeitinformationen einer Zeit, zu der die andere Kommunikationsvorrichtung (50, 100, 510, 520, 530) Empfangsverarbeitung eines Antwortrahmens auf den spezifischen Rahmen, der in dem spezifischen Rahmen enthalten ist, durchführt, Übertragen des Antwortrahmens an die andere Kommunikationsvorrichtung (50, 100, 510, 520, 530) auf der Basis der Zeit.

13. Programm, um einen Computer zu veranlassen, eine Steuerungsprozedur gemäß dem Verfahren nach Anspruch 11 durchzuführen.

14. Programm, um einen Computer zu veranlassen, eine Steuerungsprozedur gemäß dem Verfahren nach Anspruch 12 durchzuführen.

## Revendications

1. Appareil de communication (50, 100, 510, 520, 530), pour la communication avec un autre appareil de communication où un corps (20) est utilisé comme support de transmission d'un signal et où une consommation d'énergie d'un traitement en réception est plus élevée que celle d'un traitement en transmission, comprenant :
une unité de commande (143) configurée pour, en dehors d'une période active dans laquelle une requête d'association est soumise auprès de l'autre appareil de communication (60, 200, 500),
commander l'exécution d'un traitement en transmission et en réception d'une trame dans une période spécifique, et
commander l'exécution d'un traitement en transmission d'une trame dans une autre période,
**caractérisé en ce que** des informations temporelles sur un instant auquel l'appareil de communication (50, 100, 510, 520, 530) exécute un traitement en réception d'une trame de réponse à la trame dans la période spécifique sont incorporées dans la trame dans la période spécifique.

2. Appareil de communication (50, 100, 510, 520, 530) selon la revendication 1,
dans lequel l'unité de commande (143) est configurée pour commander l'exécution en premier d'une procédure de type Écouter Avant d'Émettre (Listen Before Talk), LBT, dans la période active et la définition d'une période après la procédure LBT comme la période spécifique et d'une autre période après la procédure LBT comme l'autre période.

3. Appareil de communication (50, 100, 510, 520, 530) selon la revendication 2,
dans lequel l'unité de commande (143) est configurée pour commander la définition, comme la période spécifique, d'une période quelconque parmi une période suivant immédiatement la procédure LBT, une dernière période dans la période active, et une période intermédiaire dans la période active.

4. Appareil de communication (50, 100, 510, 520, 530) selon la revendication 1,
dans lequel l'unité de commande (143) est configurée pour commander l'ajout d'informations sur un instant d'exécution du traitement en transmission et en réception à une trame transmise lors du traitement en transmission et en réception ou du traitement en transmission.

5. Appareil de communication (50, 100, 510, 520, 530) selon la revendication 1,
dans lequel l'unité de commande (143) est configurée pour commander
l'exécution d'un traitement en transmission d'une trame de requête d'association pour l'exécution de la requête d'association dans l'autre période, et
l'exécution d'un traitement en transmission d'une autre trame de requête d'association pour l'exécution de la requête d'association dans la période spécifique et l'exécution d'un traitement en réception d'une trame de réponse à la requête d'association dans la période spécifique.

6. Appareil de communication (50, 100, 510, 520, 530) selon la revendication 2,
dans lequel la communication est un échange de données conforme à la spécification ECMA-401,
l'appareil de communication (50, 100, 510, 520, 530) est activé comme un Locuteur exécutant la requête d'association, et
dans le cas où la requête d'association est acceptée par l'autre appareil de communication pendant que la procédure LBT est exécutée dans la période active, l'unité de commande (143) commande un changement de rôle de l'appareil de communication de Locuteur à Auditeur.

7. Appareil de communication (60, 200, 500), pour la communication avec un autre appareil de communication où un corps (20) est utilisé comme support de transmission d'un signal et où une consommation d'énergie d'un traitement en réception est plus élevée que celle d'un traitement en transmission, comprenant :
une unité de commande (143) configurée pour
commander la commutation entre une période active dans laquelle une requête d'association est acceptée et une période de veille dans laquelle la requête d'association n'est pas acceptée à un instant prédéterminé, et
lors de la réception d'une trame spécifique depuis un autre appareil de communication (50, 100, 510, 520, 530) dans la période active, supprimer la transition vers la période de veille afin de maintenir la période active,
**caractérisé en ce que** des informations temporelles sur un instant auquel l'autre appareil de communication (50, 100, 510, 520, 530) exécute un traitement en réception d'une trame de réponse à la trame spécifique sont incorporées dans la trame spécifique, l'unité de commande (143) commandant la transmission de la trame de réponse à l'autre appareil de communication (50, 100, 510, 520, 530) sur la base de l'instant.

8. Appareil de communication (60, 200, 500) selon la revendication 7,
dans lequel l'unité de commande (143) est configurée pour commander le maintien de la période active pendant la réception de la trame spécifique, et, suite à la réception de la trame spécifique, pour maintenir la période active pendant une période de temps prédéterminée à l'issue de la réception de la période spécifique.

9. Appareil de communication (60, 200, 500) selon la revendication 7,
dans lequel l'unité de commande (143) est configurée pour commander la transition vers la période de veille et son maintien jusqu'à l'instant auquel l'autre appareil de communication (50, 100, 510, 520, 530) exécute le traitement en réception de la trame de réponse.

10. Système de communication, comprenant :
un premier appareil de communication (50, 100, 510, 520, 530) conforme à l'appareil de communication selon l'une quelconque des revendications 1 à 6 et un deuxième appareil de communication (60, 200, 500) conforme à l'appareil de communication selon l'une quelconque des revendications 7 à 9.

11. Procédé de communication, pour la communication d'un appareil de communication avec un autre appareil de communication où un corps (20) est utilisé comme support de transmission d'un signal et où une consommation d'énergie d'un traitement en réception est plus élevée que celle d'un traitement en transmission, comprenant une procédure de commande suivante :
en dehors d'une période active dans laquelle une requête d'association est soumise par l'appareil de communication auprès de l'autre appareil de communication (60, 200, 500), l'exécution d'un traitement en transmission et en réception d'une trame dans une période spécifique, et l'exécution d'un traitement en transmission d'une trame dans une autre période,
**caractérisé par** l'incorporation, dans la trame dans la période spécifique, d'informations temporelles sur un instant auquel un traitement en réception d'une trame de réponse à la trame dans la période spécifique est exécuté.

12. Procédé de communication, pour la communication d'un appareil de communication avec un autre appareil de communication où un corps (20) est utilisé comme support de transmission d'un signal et où une consommation d'énergie d'un traitement en réception est plus élevée que celle d'un traitement en transmission, le procédé comprenant une procédure de commande, la procédure de commande comportant les étapes suivantes :
la commutation entre une période active dans laquelle une requête d'association est acceptée et une période de veille dans laquelle la requête d'association n'est pas acceptée à un instant prédéterminé, et, lors de la réception d'une trame spécifique depuis l'autre appareil de communication (50, 100, 510, 520, 530) dans la période active, la suppression de la transition vers la période de veille afin de maintenir la période active,
**caractérisé en ce que** des informations temporelles sur un instant auquel l'autre appareil de communication (50, 100, 510, 520, 530) exécute un traitement en réception d'une trame de réponse à la trame spécifique sont incorporées dans la trame spécifique, la transmission de la trame de réponse à l'autre appareil de communication (50, 100, 510, 520, 530) s'effectuant sur la base de l'instant.

13. Programme pour amener un ordinateur à exécuter une procédure de commande conforme au procédé revendiqué dans la revendication 11.

14. Programme pour amener un ordinateur à exécuter une procédure de commande conforme au procédé revendiqué dans la revendication 12.
